(19) **Europäisches Patentamt**
**European Patent Office**
**Office européen des brevets**

(11) **EP 1 629 626 B1**

(12) **EUROPEAN PATENT SPECIFICATION**

(45) Date of publication and mention
of the grant of the patent:
**27.02.2008 Bulletin 2008/09**

(21) Application number: **04733860.3**

(22) Date of filing: **19.05.2004**

(51) Int Cl.:
***H04L 9/06*** (2006.01)

(86) International application number:
**PCT/IB2004/001690**

(87) International publication number:
**WO 2004/105306 (02.12.2004 Gazette 2004/49)**

(54) **METHOD AND APPARATUS FOR A LOW MEMORY HARDWARE IMPLEMENTATION OF THE KEY EXPANSION FUNCTION**

VERFAHREN UND VORRICHTUNG FÜR EINE HADWAREIMPLEMENTIERUNG DER SCHLÜSSELEXPANSIONSFUNKTION MIT WENIG SPEICHER

PROCEDE ET APPAREIL POUR UNE IMPLEMENTATION DE LA FONCTION D'EXTENSION DE CLE A FAIBLE UTILISATION DE L'ESPACE MEMOIRE

(84) Designated Contracting States:
**AT BE BG CH CY CZ DE DK EE ES FI FR GB GR HU IE IT LI LU MC NL PL PT RO SE SI SK TR**

(30) Priority: **23.05.2003 US 473209 P**

(43) Date of publication of application:
**01.03.2006 Bulletin 2006/09**

(73) Proprietor: **NXP B.V.**
**5656 AG Eindhoven (NL)**

(72) Inventor: **SEXTON, Bonnie, C.**
**c/o Philips Int. Prop. & Stand. GmbH**
**52066 Aachen (DE)**

(74) Representative: **Volmer, Georg**
**Philips Intellectual Property & Standards GmbH**
**Postfach 50 04 42**
**52088 Aachen (DE)**

(56) References cited:
**EP-A- 1 246 389        EP-A- 1 292 066**
**US-A1- 2002 131 588**

- **ZIGIOTTA A C ET AL: "A low-cost FPGA implementation of the advanced encryption standard algorithm" IEEE, PROCEEDINGS OF THE 15TH SYMPOSIUM ON INTEGRATED CIRCUITS AND SYSTEMS DESIGNS 2002, 9 September 2002 (2002-09-09), pages 191-196, XP010621788**
- **DAEMEN J ET AL: "AES PROPOSAL: RIJNDAEL" AES PROPOSAL, XX, XX, 3 September 1999 (1999-09-03), pages 1-45, XP001060386**

Printed by Jouve, 75001 PARIS (FR)

**Description**

The present invention relates to methods and apparatuses to perform encryption. More particularly, the present invention relates to the Cipher Key used by a Key Expansion algorithm to generate a set of Round keys in the Advanced Encryption Standard (AES).

With the increase in use of items such as Smartcards and commerce transacted over the Internet, the need to encrypt and decrypt data has never been more critical than in the present. In fact, the U.S. government, particularly through the National Institute of Standards and Technology (NIST) has for many years chosen encryption standards, such as DES (Data Encryption Standards) that was selected back in 1976 as the U.S. standard, and Triple DES subsequently became the standard. In recent years, the NIST has been evaluating a plurality of AES algorithms in order to select a new standard (AES) that would become the official encryption standard of the United States. Joan Daemen and Vincent Rijmen presented a cryptographic algorithm that has been approved by the NIST, and published on November 26, 2001 entitled Federal Information Processing Standards Publication No. 197 (hereinafter referred to as "FIPS' 197). This algorithm in FIPS' 197 is referred to as the Rijndael algorithm.

AES uses three systems of 128,192 and 256 bits so as to improve the 56 bit encryption of the prior art in terms of performance, flexibility, efficiency, thereby providing an easier way to embody.

The basic unit for processing in the AES algorithm is a byte. Internally, the AES algorithm's operations are performed on a two-dimensional array of bytes called the STATE. The STATE generally has four rows of bytes, each containing Nb bytes, where Nb is the block length divided by 32.

Encryption converts data to an unintelligible form called cipher text. Decryption of the cipher text converts the data, which is referred to as "plaintext", back into its original form. Common terminology in the art refers to the series of transformations that converts plaintext to cipher text as "Cipher", whereas the series of transformations that converts cipher text to plaintext is referred to as "Inverse Cipher." In both Ciphering and Inverse Ciphering, a Cipher Key, which is a secret cryptographic key that is used by an Expansion Key Routine, generates a series of values (called round keys) that are applied to the STATE in the Cipher and Inverse Cipher routines.

The input and output for the AES algorithm each consists of sequences of 128 bits (digits with values of 0 or 1). These sequences will sometimes be referred to as blocks, and the number of bits that they contain will be referred to as their length.

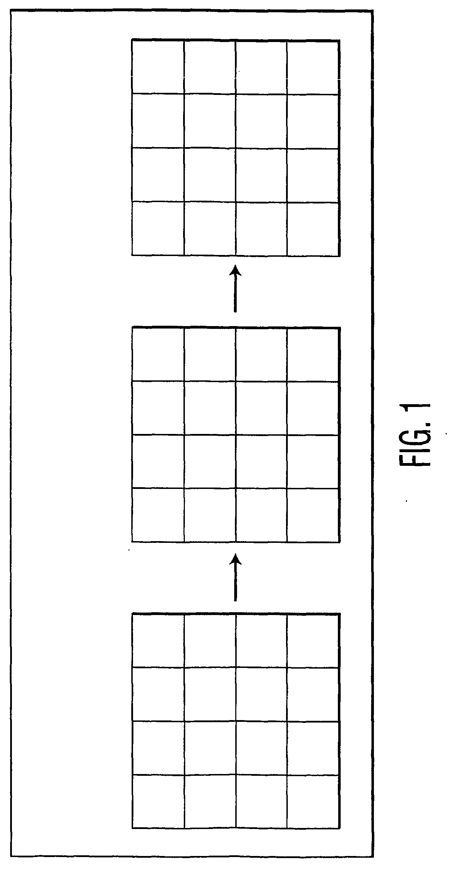

Fig. 1 illustrates an example of a STATE array input and output. At the start of the Cipher and Inverse Cipher, the input array of bytes ($in_0$ to $in_{15}$) is copied into the STATE as shown in Fig. 1. The Cipher or Inverse Cipher operations are then conducted on this STATE array, after which its final value is copied to the array of output bytes $out_0$ to $out_{15}$. With regard to Fig. 1, as disclosed in "FIPS 197" by NIST, at the start of the Cipher and Inverse Cipher, the input, which is the array of bytes $in_0$ to $in_{15}$, is copied into the STATE array as shown. The Cipher or Inverse Cipher operations are then conducted on this State array, after which its final value is copied to the output, which is shown as the array of bytes ranging from $out_0$ to $out_{15}$. The addition of two elements in a finite field is achieved by "Adding" the coefficients for the corresponding powers in the polynomials for the two elements. The addition is performed with Boolean exclusive-or (XOR) operations ("FIPS' 197", NIST, p. 10). Shown below is a binary notation example for adding two bytes:

$$\{01010111\} \oplus \{1000011\} = \{11010100\}. \qquad eqn\ (1.0)$$

A Cipher Key is a secret, cryptographic key that is used by the Key Expansion algorithm to generate a set of Round Keys; it can be pictured as a rectangular array of bytes, having four rows and Nk columns ("FIPS' 197", NIST, page 6).

The Round Keys are values that are derived from the Cipher Key by means of the key schedule. The key schedule includes two components: the Key Expansion and the Round Key Selection ("The Rijndael Cipher Block", Daemen and Rijmen, page 14). AES uses an algorithm that utilizes the Cipher Key, and generates a key schedule by performing the Key Expansion routine.

The Round Keys are applied to the STATE in the Cipher and Inverse Cipher transformations. The length of a Round Key is equal to the size of the STATE, and the Round Key is added to the STATE using an XOR operation.

Here we are concerned with reducing the size of the memory needed to support the Key Expansion. The current teaching provides for hardware implementation where the Cipher Key is expanded to support three key lengths: 128, 192 or 256 bits. The number of calculations depends on the KeyBits and blockbits. For 128 length keys, 10 calculations are required. For 192 length keys, 12 calculations are required. For the largest current key length (256), 14 calculations are required. Thus, the largest number of keys needed is 14.

The original AES software implementation uses storage for the maximum number of keys (14). In hardware, this storage requires 14 x 128 bit storage locations. An implementation of this feature in CMOS 18 uses about 10,000 gates.

Thus, it would be advantageous to provide a method of decreasing the gate size and at the same time not increase the maximum path delay to any great extent, resulting in a smaller circuit that would be more attractive for high data-rate designs than known heretofore.

*An apparatus for encryption/decryption according to the preamble of claim 1 is disclosed in prior art document US 2002/0131588 A1 as well as in prior art document EP 1 292 066 A1. These known apparatuses are designed for encrypting/decrypting a real-time input stream, in particular for on-the-fly Rijndael decryption Round key calculation (cf. EP 1 292 066 A1).*

*For reducing the size of the key register required for the encryption/decryption of block data according to prior art document US 2002/0131588 A1 said apparatus finds the key for encryption or decryption of one block every round when realizing the encryption and decryption of the AES algorithm in a hardware manner, and then outputs the found keys to the block round unit.*

*For obviating the need to store the expanded key or to wait until the expanded key is generated from the cipher key before beginning decryption according to prior art document EP 1 292 066 A1 the respective new data word is loaded into a shift register, whereupon one of the data words stored in said shift register is shifted out of the shift register, the sub-keys being comprised of one or more of the output data words.*

The present invention provides a method for decreasing the amount of gates required for processing the Expansion Key function without affecting the maximum path delay. An advantage of the invention is that the decreased amount of circuitry reduces the size, thus making the circuit smaller and more attractive for high data-rate designs.

According to an aspect of the present invention, each key expansion is performed to support both encryption and decryption. The new architecture utilizes a circuit that implements both normal and inverse key expansion that is synchronized with the Round Key processing and thus allows a smaller memory area to be used. The memory space is decreased by one-half from the prior art 14 to the heretofore unknown number of seven memory spaces for 14 expanded keys, with no increase in access time.

*The key expansion module includes means, in particular being provided in step (d) of the method, for expanding 14 keys such that keys 14 to 8 are expanded during decryption in the memory spaces in descending location order, followed by expanding keys 1 to 7 in ascending location order, followed by keys 14 to 8 being re-expanded in descending location order. The memory, in particular being provided in step (a) of the method, comprises no more than seven memory spaces for storing the key values, and once key 8 is read from a location 1, key 7 is expanded and placed in location, wherein keys 7 to 1 are read in ascending location order and a Round Key Algorithm is performed in parallel with each key expansion.*

According to an advantageous embodiment of the apparatus of the present invention as well as of the method of the present invention, the key expansion module includes means, in particular being provided in step (d) of the method, for expanding 14 keys such that keys 1 to 7 are sequentially expanded during encryption, with each expanded key value being used for processing a Round Key algorithm in parallel before another key is sequentially expanded.

The above and other features and advantages of the present invention will become more apparent from the following detailed description when taken in conjunction with the accompanying drawings, in which:

FIG. 1 illustrates a STATE array and its input and output bytes.
FIG. 2 illustrates one way that an apparatus according to the present invention can be arranged.
FIG. 3 is a flow chart providing an overview a method according to the present invention.

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments, which depart from these specific details. Moreover, for the purpose of clarity, detailed descriptions of well-known devices, circuits, and methods are omitted so as not to obscure the description of the present invention with unnecessary detail.

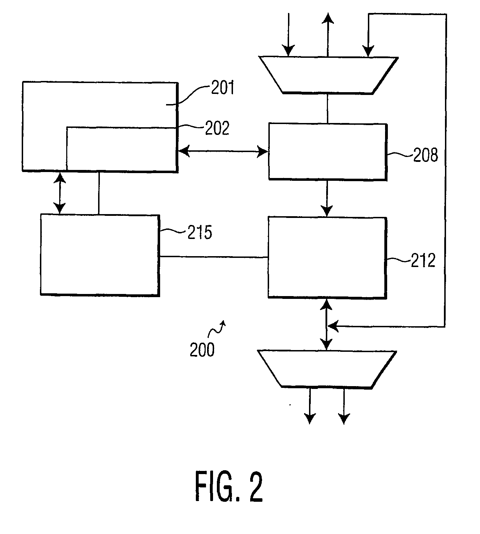

Fig. 2 illustrates one way that an apparatus of the present invention can be arranged. A person of ordinary skill in the art understands that the illustrated physical layout is provided for explanatory purposes, and for example, the key expansion module and key scheduler can be combined, and the memory could be part of any module or a discrete area.

A keyschedule unit 201 has key values that are expanded by key expansion module 215. These values can be stored in memory 202. A conversion unit 208 encrypts/decrypts one of plaintext/ciphertext for a certain predetermined number of rounds, and a block round unit 212 carries out Round Key processing while the key expansion unit provides key expansion. Preferably, the key expansion function and Round Key processing is synchronized for each respective key so that these operation are performed at the same time (more or less in parallel).

According to the present invention, by implementing the key expansion algorithm with a smaller number of memory spaces, the timing of when the keys are used becomes an important factor. For example, during encryption mode, one key must be calculated before the process begins. While data is being processed by the Round Key algorithm, a second key can be calculated in parallel. If only a single encryption mode were needed, a single memory space would suffice.

The task is somewhat more difficult for decryption because key 14 is used first. Key 14 must be calculated based on the other 13 keys. The same idea of calculating keys in parallel with Round Key processing can still be used. If the order of writing keys into memory is carefully planned, both encryption and decryption can be supported with only seven memory spaces and very little additional control logic.

The rate at which keys are calculated relative to Round Key processing must also be carefully planned. By doing key calculations and Round Key processing in parallel with synchronization, the advantages of the present invention are realized.

The 256 key length requires the most memory so this length will be used to illustrate the new mechanism. Below is the conventional algorithm given in C code notation according to Rijndael (Rijndael-alg-ref.c version 2.0, Barreto and Rijmen) :

```
Int rijndaelKeySched (word9 k[4] [MAXKC], int keyBits, int blockBits, word8
W [MAXROUNDS + 1] [4] [MAXABC])}
/* Calculate the necessary round keys
  * The number of calculations depends on keyBits and blockBits
  */
int KC, BC, ROUNDS;
int I, j, t, rconpointer = 0;
word8 tk[4] [MAXKC]
switch (keyBits0 {
case 128: KC = 4; break;
case 192: KC = 6; break;
case 256: KC = 8; break;
default : return (-1);
}
switch (blockBits) {
case 128: BC = 4; break;
case 192: BC = 6; break;
case 256: BC = 8; break;
default : return (-2);
}
switch (keyBits >= blockBits ? keyBits : blockbits) {
case 128: ROUNDS = 10; break;
case 192: ROUNDS = 12; break;
case 256: ROUNDS = 14; break;
default : return (-3); /* this cannot happen */
}
for (j =0; j< KC; j++)
    for (i = 0; i < 4; i++)
        tk [i] [j] =1 [i] [j];
    t = 0;
    /* copy values into round key array */
for (j = 0; (j < KC) && (t < (ROUNDS + 1) *BC); j++, t++)
    for (I = 0; i< 4; i++) W[t/BC] [i] [t % BC] = tk [i] [j];
while (t < (ROUNDS + 1) * BC) {/* while not enough round key material
calculated */
/* calculate new values */
  for (I =0; I < 4; i++)
        tk [i] [0] ^= S[tk[(i + 1) % 4] [KC - 1];
  tk [0] [0]^= rcon [rconpointer ++];
  if (KC ! =8)
      for (j =1; j < KC; j++)
          for (i = 0; i < 4; i ++) tk[i][j] ^ = tk [i] [j-1];
      else {
      for (j = 1; j < KC/2; j++)
          for (i=0; i < 4; i++) tk [i][j] ^ = tk [i] [j-1]
      for (i = 0; i < 4; i++) tk [i][KC/2] ^ = S[tk [i] [KC/2 - 1]];
      for (j = KC/2 + 1; j < KC; j++)
              for (i = 0; i < 4; i++) tk [i] [j] ^= tk [i] [j - 1];
  }
```

```
/* copy values into round key array */
for (j = 0; (j < KC) && (t < (ROUNDS + 1) * BC); j++, t++)
        for (i=0; I < 4; i++) W[t/BC] [i] [t % BC] = tk [i] [j];
}
return 0;
}
```

It is noted that for a hardware implementation the maximum amount of memory for 14 keys must be allocated to implement the above code (case 256: ROUNDS = 14; break;).

It is also noted that this conventional expansion algorithm is done before the processing of Round Keys begins and does not allow for parallel activity.

In contrast to the above, the present invention uses a circuit that implements both normal and inverse key expansion, which is synchronized with the Round Key processing.

Look at encryption (normal) expansion, the example given will be the key length 256 as it requires the most memory locations. It follows that the other two cases (128 and 192 key lengths) also work because fewer Expanded keys are required. It also logically follows that if a key length is ever used that is greater than 256, the present invention is still effective in reducing required memory.

According to an aspect of the present invention, the algorithm for expanding keys and rounding keys in parallel is as follows:

```
Expand-Key_Number=14
For k=1 to Expand_Key_Number
{
if (k < 8) n=k else n = k-7
Expand key k and store to location n
Read location n and do Round Key algorithm, expand key k and store to location n+1
}
```

For the decryption (inverse) expansion all 14 keys must first be calculated. The calculations for the first seven keys are performed in descending order and then thrown away. The next seven keys are expanded in ascending location order. As the last seven keys are read in descending order, the first seven are re-expanded in descending ordering. Once key 8 is read from location 1, key seven is expanded and placed in location 1. The keys 7 through 1 are then read in ascending location order. The algorithm is as follows:

```
Expand_Key_Number = 14
For k =1 to Expand_Key_Number
{
if (k < 8) n = 8 - k else n = k-7
Expand key k and store to location n
}
For k = Expand_Key_Number to 1
{
  if (k < 8) n = 8 - k else n=k-7
 Read location n and do Round Key algorithm, expand key 8 -n and store to location n
}.
```

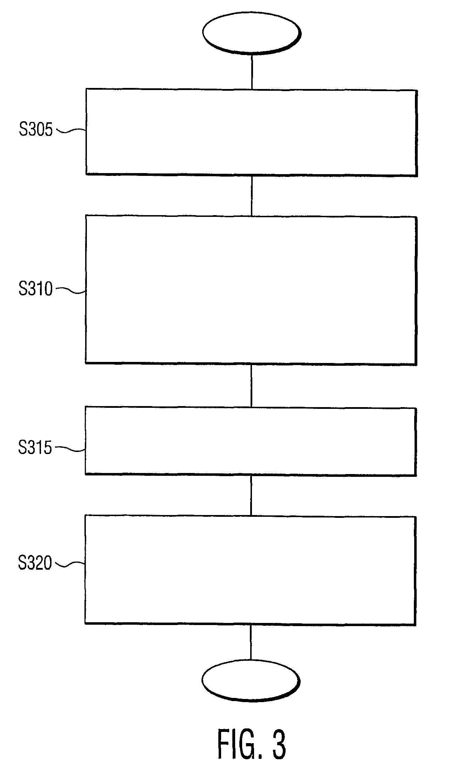

Finally, Fig. 3 shows the method steps explaining one way that the present invention can be performed. At step 305, a keyschedule unit 201 for a Cipher Key provides a predetermined number of expanded key values, said keyschedule unit 201 having a memory 202.

Step 310 includes *converting a block of plain text/ciphered text into a predetermined number of byte units in a first plurality of columns by means of a conversion module 208,* said conversion module 208 being in communication with the keyschedule unit 201.

Step 315 includes *processing Round Keys for encrypting/decrypting the predetermined number of byte units into ciphered text/plain text by means of a block round unit 212;* and

step 320 includes performing *key expansion on both normal (encryption) and inverse (decryption) functions to obtain expanded key values by means of a key expansion module 215;*

wherein a rate at which the key values are expanded in step 320 is synchronized with Round Key processing by the block round unit 212 in step 315 so that each of the respective key values is expanded in parallel with a respective Round Key being processed.

Thus, the number of memory spaces in the memory 202 required for storage of the expanded key values is no greater than half the number of expanded key values.

By examining the design suggested by the AES proposal (NIST, November 26, 2001) implemented in two ways; a 128, 192 and 256 key length with 14 memory spaces and a second design with half the memory space and using careful recalculations in relation to the Round Key processing it has been shown by the present invention that the new algorithm will reduce the space required by one half.

For example, the number of bits of common logic used, the layout of the modules and sub-modules of the apparatus, the number of blocks of data converted, the input and output modules, all can be modified according to need. As the present invention is capable of use with security networking processors, secure keyboard devices, magnetic card reader devices, smart card reader devices, and wireless communication applications such as 802.11 devices, the receipt or output of data can be contained within common circuitry or transmitted over RF, fiber optic, microwave, etc. In such cases a transmission and receive capabilities would be included, along with the protocol conversion from the various types of transmission. Further, while the examples show 8 bytes (128 bits), this amount could be increased or decreased according to need, and/or changes in the AES protocol. It should also be noted that terms such as "plain text" and "ciphered text" are terms of art and the encryption/decryption can encompass drawings, photos, illustrations, schematics, include voice, video, and/or multimedia data.

For example, the key expansion module is shown for illustrative purposes as a discrete unit that is separate form the keyscheduler, and the memory shown in the keyscheduler could be a common memory or arranged and/or all the components can be arranged on a common circuit card. While 128,192 and 256 length key blocks were used for examples, any length key block larger or smaller can be used without departing from the scope of the appended claims.

## Claims

1. An apparatus for encryption and decryption (200), comprising:

   - a keyschedule unit (201) for a Cipher Key, said keyschedule unit (201) providing a predetermined number of expanded key values, said keyschedule unit having a memory (202);
   - a conversion module (208) in communication with the keyschedule unit (201), said conversion module converts a block of plain text or ciphered text into a predetermined number of byte units in a first plurality of columns;
   - a block round unit (212) processing Round Keys for encrypting or decrypting the predetermined number of byte units into ciphered text or plain text; and
   - a key expansion module (215) for performing key expansion on both normal (encryption) and inverse (decryption) functions to obtain expanded key values;

   wherein a number of memory spaces in the memory (202) required for storage of the expanded key values is no greater than half the number of expanded key values,
   **characterized in**

   - **that** a rate at which the key values are expanded is synchronized with Round Key processing by the block round unit (212) so that each of the respective key values is expanded in parallel with a respective Round Key being processed,
   - **that** *the key expansion module (215) includes means for expanding 14 keys*

   *wherein during decryption keys 14 to 8 are expanded in the memory spaces in descending location order, followed by expanding keys 7 to 1 in ascending location order, followed by keys 14 to 8 being re-expanded in descending location order, and*

   - **that** the memory (202) comprises no more than seven memory spaces for storing the key values, and once key 8 is read from a location 1, key 7 is expanded and placed in location 1, wherein keys 7 to 1 are read in ascending location order and a Round Key Algorithm is performed in parallel with each key expansion.

2. The apparatus according to claim 1, wherein the predetermined number of expanded key values equals 14 and the number of memory spaces is equal to seven with equal access time or with a decrease in access time relative to an equal number of expanded key values and number of memory spaces.

3. The apparatus according to claim 1, wherein the predetermined number of expanded key values equals 12 and the number of memory spaces is equal to 6.

**4.** The apparatus according to claim 1, wherein the predetermined number of expanded key values equals 10 and the number of memory spaces is equal to 5.

**5.** The apparatus according to claim 2, wherein a key length of the Cipher Key is 256 bits.

**6.** The apparatus according to claim 3, wherein a key length of the Cipher Key is 192 bits.

**7.** The apparatus according to claim 4, wherein a key length of the Cipher Key is 128 bits.

**8.** The apparatus according to claim 1, wherein a key length of the Cipher Key is greater than 256 bits.

**9.** A method for reducing memory requirements during a key expansion function, said method comprising the steps of:

(a) providing a predetermined number of expanded key values by means of a keyschedule unit (201) for a Cipher Key, said keyschedule unit (201) having a memory (202);
(b) converting a block of plain text or ciphered text into a predetermined number of byte units in a first plurality of columns by means of a conversion module (208), said conversion module (208) being in communication with the keyschedule unit (201);
(c) processing Round Keys for encrypting or decrypting the predetermined number of byte units into ciphered text or plain text by means of a block round unit (212);
(d) performing key expansion on both normal encryption and inverse decryption functions to obtain expanded key values by means of a key expansion module (215),

wherein a number of memory spaces in the memory (202) required for storage of the expanded key values is no greater than half the number of expanded key values,
**characterized in**

- **that** a rate at which the key values are expanded in step (d) is synchronized with Round Key processing by the block round unit (212) in step (c) so that each of the respective key values is expanded in parallel with a respective Round Key being processed,
- *that the key expansion module (215) provided in step (d) expands 14 keys wherein during decryption keys 14 to 8 are expanded in the memory spaces in a descending location order, followed by expanding keys 7 to 1 in ascending location order, followed by keys 14 to 8 being re-expanded in descending location order, and*
- **that** the memory (202) provided in step (a) comprises no more than seven memory spaces for storing the key values and once key 8 is read from a location 1, key 7 is expanded and placed in location 1, wherein keys 7 to 1 are read in ascending location order and a Round Key Algorithm is performed in parallel with each key expansion.

**10.** The method according to claim 9, wherein the number of memory spaces in said memory (202) is equal to seven, and the predetermined number of expanded key values equals 14, with equal access time or with a decrease in access time relative to an equal number of expanded key values and number of memory spaces.

**11.** A computer program product for reducing memory requirements during a key expansion function, said computer program product comprising a computer-readable medium of executable instructions comprising executable instructions for performing the method according to claim 9.

**Patentansprüche**

**1.** Verschlüsselungsvorrichtung zur Verschlüsselung und Entschlüsselung (200), umfassend:

- eine Schlüsselplaneinheit (201) für einen Chiffrierschlüssel, wobei die Schlüsselplaneinheit (201) eine vorgegebene Anzahl expandierter Schlüsselwerte bereitstellt, wobei die Schlüsselplaneinheit einen Speicher (202) aufweist,
- ein Umwandlungsmodul (208) in Verbindung mit der Schlüsselplaneinheit (201), wobei das Umwandlungsmodul einen Block Klartext oder Chiffretext in eine vorgegebene Anzahl von Byte-Einheiten in einer ersten Mehrzahl von Spalten umwandelt,
- eine Blockrundeneinheit (212), die Rundenschlüssel zur Verschlüsselung oder Entschlüsselung der vorgegebenen Anzahl von Byte-Einheiten in Chiffretext oder Klartext verarbeitet, und
- ein Schlüsselexpansionsmodul (215) zum Durchführen von Schlüsselexpansion sowohl an normalen (Verschlüsselungs-) als auch an inversen (Entschlüsselungs-)Funktionen zum Erhalten von expandierten Schlüsselwerten,

wobei eine Anzahl von für das Speichern der expandierten Schlüsselwerte erforderlichen Speicherplätzen in dem Speicher (202) nicht größer ist als die Hälfte der Anzahl expandierter Schlüsselwerte,
**dadurch gekennzeichnet,**

- **dass** eine Rate, mit der die Schlüsselwerte expandiert werden, mit der Rundenschlüsselverarbeitung durch die Blockrundeneinheit (212) synchronisiert ist, sodass jeder der jeweiligen Schlüsselwerte parallel zu einem aktuell verarbeiteten jeweiligen Rundenschlüssel expandiert wird,
- **dass** das Schlüsselexpansionsmodul (215) Mittel einschließt, um 14 Schlüssel zu expandieren, wobei Schlüssel 14 bis 8 während der Entschlüsselung in den Speicherplätzen in absteigender Reihenfolge der Stellen expandiert werden, gefolgt von dem Expandieren von Schlüssel 7 bis 1 in aufsteigender Reihenfolge der Stellen, gefolgt von erneutem Expandieren von Schlüssel 14 bis 8 in absteigender Reihenfolge der Stellen, und
- **dass** der Speicher (202) nicht mehr als sieben Speicherplätze zum Speichern der Schlüsselwerte umfasst, und nachdem Schlüssel 8 aus einer Stelle 1 ausgelesen wurde, Schlüssel 7 expandiert und an die Stelle 1 gebracht wird, wobei Schlüssel 7 bis 1 in aufsteigender Reihenfolge der Stellen gelesen werden und parallel zu jeder Schlüsselexpansion ein Rundenschlüsselalgorithmus ausgeführt wird.

2. Die Vorrichtung nach Anspruch 1, wobei die vorgegebene Anzahl expandierter Schlüsselwerte gleich 14 ist und die Anzahl von Speicherplätzen gleich sieben ist, mit gleicher Zugriffszeit oder mit einer Verringerung der Zugriffszeit in Bezug auf eine gleiche Anzahl expandierter Schlüsselwerte und Anzahl von Speicherplätzen.

3. Die Vorrichtung nach Anspruch 1, wobei die vorgegebene Anzahl expandierter Schlüsselwerte gleich 12 ist und die Anzahl von Speicherplätzen gleich 6 ist.

4. Die Vorrichtung nach Anspruch 1, wobei die vorgegebene Anzahl expandierter Schlüsselwerte gleich 10 ist und die Anzahl von Speicherplätzen gleich 5 ist.

5. Die Vorrichtung nach Anspruch 2, wobei eine Schlüssellänge des Chiffrierschlüssels 256 Bit beträgt.

6. Die Vorrichtung nach Anspruch 3, wobei eine Schlüssellänge des Chiffrierschlüssels 192 Bit beträgt.

7. Die Vorrichtung nach Anspruch 4, wobei eine Schlüssellänge des Chiffrierschlüssels 128 Bit beträgt.

8. Die Vorrichtung nach Anspruch 1, wobei eine Schlüssellänge des Chiffrierschlüssels größer als 256 Bit ist.

9. Verfahren zur Reduzierung von Speicheranforderungen während einer Schlüsselexpansionsfunktion, wobei das Verfahren die folgenden Schritte umfasst:

(a) Bereitstellen einer vorgegebenen Anzahl expandierter Schlüsselwerte mittels einer Schlüsselplaneinheit (201) für einen Chiffrierschlüssel, wobei die Schlüsselplaneinheit (201) einen Speicher (202) aufweist,
(b) Umwandeln eines Blocks Klartext oder Chiffretext in eine vorgegebene Anzahl von Byte-Einheiten in einer ersten Mehrzahl von Spalten mittels eines Umwandlungsmoduls (208), wobei das Umwandlungsmodul (208) in Verbindung mit der Schlüsselplaneinheit (201) steht,
(c) Verarbeiten von Rundenschlüsseln zur Verschlüsselung oder Entschlüsselung der vorgegebenen Anzahl von Byte-Einheiten in Chiffretext oder Klartext mittels einer Blockrundeneinheit (212),
(d) Durchführen von Schlüsselexpansion sowohl an normalen Verschlüsselungs- als auch an inversen Entschlüsselungsfunktionen zum Erhalten von expandierten Schlüsselwerten mittels eines Schlüsselexpansionsmoduls (215),

wobei eine Anzahl von für das Speichern der expandierten Schlüsselwerte erforderlichen Speicherplätzen in dem Speicher (202) nicht größer ist als die Hälfte der Anzahl expandierter Schlüsselwerte,
**dadurch gekennzeichnet,**

- **dass** eine Rate, mit der die Schlüsselwerte in Schritt (d) expandiert werden, mit der Rundenschlüsselverarbeitung durch die Blockrundeneinheit (212) in Schritt (c) synchronisiert ist, sodass jeder der jeweiligen Schlüsselwerte parallel zu einem aktuell verarbeiteten jeweiligen Rundenschlüssel expandiert wird,
- **dass** das in Schritt (d) bereitgestellte Schlüsselexpansionsmodul (215) 14 Schlüssel expandiert, wobei Schlüssel 14 bis 8 während der Entschlüsselung in den Speicherplätzen in einer absteigenden Reihenfolge der Stellen expandiert werden, gefolgt von dem Expandieren von Schlüssel 7 bis 1 in aufsteigender Reihenfolge der Stellen, gefolgt von erneutem Expandieren von Schlüssel 14 bis 8 in absteigender Reihenfolge der Stellen, und
- **dass** der in Schritt (a) bereitgestellte Speicher (202) nicht mehr als sieben Speicherplätze zum Speichern der Schlüsselwerte umfasst, und nachdem Schlüssel 8 aus einer Stelle 1 ausgelesen wurde, Schlüssel 7 expandiert und an die Stelle 1 gebracht wird,

wobei Schlüssel 7 bis 1 in aufsteigender Reihenfolge der Stellen gelesen werden und parallel zu jeder Schlüsselexpansion ein Rundenschlüsselalgorithmus ausgeführt wird.

10. Das Verfahren nach Anspruch 9, wobei die Anzahl von Speicherplätzen in dem Speicher (202) gleich sieben ist und die vorgegebene Anzahl expandierter Schlüsselwerte gleich 14 ist, mit gleicher Zugriffszeit oder mit einer Verringerung der Zugriffszeit in Bezug auf eine gleiche Anzahl expandierter Schlüsselwerte und Anzahl von Speicherplätzen.

11. Computerprogrammprodukt zum Reduzieren von Speicheranforderungen während einer Schlüsselexpansionsfunktion, wobei das Computerprogrammprodukt ein rechnerlesbares Medium ausführbarer Befehle umfasst, das ausführbare Befehle zur Durchführung des Verfahrens nach Anspruch 9 umfasst.

## Revendications

1. Appareil pour le chiffrement et le déchiffrement (200) comprenant :

   - une unité de séquencement de clés (201) pour une Clé de Chiffrement, ladite unité de séquencement de clés (201) fournissant un nombre prédéterminé de valeurs de clé étendues, ladite unité de séquencement de clés ayant une mémoire (202) ;
   - un module de conversion (208) en communication avec l'unité de séquencement de clés (201), ledit module de conversion convertissant un bloc de texte en clair ou de texte chiffré en un nombre prédéterminé d'unités d'octet dans une première pluralité de colonnes ;
   - une unité de ronde de blocs (212 traitant les Clés de Ronde pour chiffrer ou déchiffrer le nombre prédéterminé d'unités d'octet en un texte chiffré ou déchiffré ; et
   - un module d'extension de clés (215) pour effectuer l'extension de clés à la fois pour une fonction normale (chiffrement) et une fonction inverse (déchiffrement), de manière à obtenir des valeurs de clé étendues ; dans lequel un certain nombre d'espaces de mémoire dans la mémoire (202) requis pour le stockage des valeurs de clé étendues n'est pas supérieur à la moitié du nombre de valeurs de clé étendues, **caractérisé par le fait**
   - **que** la vitesse à laquelle les valeurs de clé sont étendues est synchronisée avec le traitement des Clés de Ronde dans l'unité de ronde de bloc (212), de telle sorte que chacune des valeurs respectives de clé est étendue en parallèle avec un traitement de la clé de ronde correspondante
   - *que le module d'extension de clé (215) comprend des moyens pour étendre 14 clés, dans lesquels, lors du déchiffrement, les clés 14 à 8 sont étendues dans les espaces de mémoire dans l'ordre décroissant des emplacements de mémoire, opération suivie par une extension des clés 7 à 1 dans l'ordre croissant des emplacements, opération suivie par une réextension des clés 14 à 8 dans l'ordre décroissant des emplacements, et*
   - **que** la mémoire (202) ne comprend pas plus de sept emplacements de mémoire pour le stockage des valeurs de clé, et qu'une fois que la clé 8 est lue à partir d'un emplacement 1, la clé 7 est étendue et placée dans l'emplacement 1, dans lequel les clés 7 à 1 sont lues dans l'ordre croissant des emplacements et dans lequel un Algorithme de Clés de Ronde est réalisé en parallèle avec chaque extension de clé.

2. Appareil selon la revendication 1, dans lequel le nombre prédéterminé de valeurs de clé étendues est égal à 14 et le nombre d'espaces de mémoire est égal à 7, avec des temps d'accès égaux ou une diminution du temps d'accès par rapport à un nombre égal de valeurs de clé étendues et un nombre égal d'espaces de mémoire.

3. Appareil selon la revendication 1, dans lequel le nombre prédéterminé de valeurs de clé étendues est égal à 12 et le nombre d'espaces de mémoire est égal à 6.

**4.** Appareil selon la revendication 1, dans lequel le nombre prédéterminé de valeurs de clé étendues est égal à 10 et le nombre d'espaces de mémoire est égal à 5.

**5.** Appareil selon la revendication 2, dans lequel la longueur de clé de la Clé de Chiffrement est de 256 bits.

**6.** Appareil selon la revendication 3, dans lequel la longueur de clé de la Clé de Chiffrement est de 192 bits.

**7.** Appareil selon la revendication 4, dans lequel la longueur de clé de la Clé de Chiffrement est de 128 bits.

**8.** Appareil selon la revendication 1, dans lequel la longueur de clé de la Clé de Chiffrement est supérieure à 256 bits.

**9.** Procédé pour réduire les besoins en mémoire lors d'une fonction d'extension de clé, ledit procédé comprenant les étapes suivantes :

- fourniture d'un nombre prédéterminé de valeurs de clé étendues à l'aide d'une unité de séquencement de clés (201) pour une Clé de Chiffrement, ladite unité de séquencement de clés (201)ayant une mémoire (202) ;
- convertir un bloc de texte en clair ou de texte chiffré en un nombre prédéterminé d'unités d'octet dans une première pluralité de colonnes à l'aide d'un module de conversion (208), ledit module de conversion (208) étant en communication avec l'unité de séquencement de clés (201) ;
- traiter les Clés de Ronde pour chiffrer ou déchiffrer le nombre prédéterminé d'unités d'octet en un texte chiffré ou déchiffré à l'aide d'une unité de ronde de blocs (212) ;
- effectuer l'extension de clés à la fois pour une fonction normale de chiffrement et inverse de déchiffrement, de manière à obtenir des valeurs de clé étendues à l'aide d'un module d'extension de clés (215),

dans lequel un certain nombre d'espaces de mémoire dans la mémoire (202) requis pour le stockage des valeurs de clé étendues n'est pas supérieur à la moitié du nombre de valeurs de clé étendues, **caractérisé par le fait**

- **que** la vitesse à laquelle les valeurs de clé sont étendues dans l'étape (d) est synchronisée avec le traitement des Clés de Ronde par l'unité de ronde de bloc (212) dans l'étape (c), de telle sorte que chacune des valeurs respectives de clé est étendue en parallèle avec le traitement de la clé de ronde correspondante,
- *que le module d'extension de clé (215) prévu dans l'étape (d) réalise l'extension de 14 clés, dans lesquels, lors du déchiffrement, les clés 14 à 8 sont étendues dans les espaces de mémoire dans un ordre décroissant des emplacements de mémoire, opération suivie par une extension des clés 7 à 1 dans l'ordre croissant des emplacements, opération suivie par une réextension des clés 14 à 8 dans l'ordre décroissant des emplacements, et*
- **que** la mémoire (202) prévue dans l'étape (a) ne comprend pas plus de sept emplacements de mémoire pour le stockage des valeurs de clé, et qu'une fois que la clé 8 est lue à partir de l'emplacement 1, la clé 7 est étendue et placée dans l'emplacement 1, dans lequel les clés 7 à 1 sont lues dans l'ordre croissant des emplacements et dans lequel un Algorithme de Clés de Ronde est réalisé en parallèle avec chaque extension de clé.

**10.** Procédé selon la revendication 9, dans lequel le nombre d'espaces de mémoire dans ladite mémoire (202) est égal à 7 et le nombre prédéterminé de valeurs de clé étendues est égal à 14, avec des temps d'accès égaux ou une diminution du temps d'accès par rapport à un nombre égal de valeurs de clé étendues et un nombre égal d'espaces de mémoire.

**11.** Produit de programme informatique pour la réduction des besoins en mémoire lors d'une fonction d'extension de clé, ledit produit de programme informatique comprenant un média, lisible par ordinateur, d'instructions exécutables comprenant des instructions exécutables pour la réalisation du procédé selon la revendication 9.

FIG. 1

FIG. 2

S305

S310

S315

S320

FIG. 3

**EP 1 629 626 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020131588 A1
- EP 1292066 A1